# EUROPÄISCHE PATENTANMELDUNG

(11) **EP 4 072 180 A1**
(43) Veröffentlichungstag der Anmeldung: **12.10.2022**
(21) Anmeldenummer: 21167347.0
(22) Anmeldetag: 08.04.2021
(51) Int. Cl.: H04W 12/06, H04W 12/02, H04W 12/47, H04W 12/03, B60L 53/10

(54) **VERFAHREN ZUR AUTORISIERUNG EINES LADEVORGANGS AN EINEM LADEPUNKT**

(71) Anmelder: Siemens Aktiengesellschaft, 80333 München (DE)
(72) Erfinder: Bode, Sebastian, 59229 Ahlen (DE)

(57) **Zusammenfassung**

Zur Authentifizierung eines Nutzers an einem Ladepunkt werden üblicherweise Authentifikationsmittel, insbesondere Ladekarten oder RFID-Karte, eingesetzt. Ein auf der Ladekarte gespeichertes Identifikationsmerkmal wird derzeit an eine Vielzahl möglicher Vertragspartner übertragen, um eine Authentifizierung durch einen hierzu berechtigten Vertragspartner zu erzielen.

Die vorliegende Erfindung zeigt ein datensparsameres Verfahren zur Autorisierung eines Ladevorgangs, mit dem eine missbräuchliche Verwendung von Identifikationsmerkmalen seitens eines Vertragspartners technisch unterbunden oder beschränkt wird.

Im Gegensatz zu derzeit üblichen Verfahren wird zur erfindungsgemäßen Authentifizierung ein Abbildungsmerkmal anstelle des Identifikationsmerkmals an die Vielzahl möglicher Vertragspartner übertragen. Eine Authentisierung erfolgt nicht durch Vergleich der in einem »Klartext« vorliegenden Identifikationsmerkmale, sondern durch Vergleich der Abbildungsmerkmale, welche beispielsweise als kryptographische Hashwerte der Identifikationsmerkmale vorliegen. Dadurch kann ein Unberechtigter keinen Zugriff auf die Identifikationsmerkmale erlangen. Die Erfindung zeigt zwei Varianten, wonach der Vergleich der Abbildungsmerkmale entweder im Ladepunkt oder in einer Authentifizierungsstelle des Vertragspartners stattfindet.

## Beschreibung

Die Erfindung betrifft ein Verfahren zur Autorisierung eines elektrischen Ladevorgangs an einem Ladepunkt.

Elektrofahrzeuge bzw. zumindest teilweise mit elektrischer Energie angetriebene Fahrzeuge weisen mindestens einen Akkumulator auf, welcher in einem laufenden Betrieb des Elektrofahrzeugs regelmäßig zu laden ist. Ein Laden des Elektrofahrzeugs durch eine Nutzerin oder einen Nutzer - im Folgenden Nutzer - erfolgt an einer Ladestation oder einem Ladepunkt - in der Fachwelt auch als Electric Vehicle Supply Equipment oder abkürzend EVSE bekannt - welches über ein Ladekabel oder auch mit einer drahtlosen, induktiven Kopplung mit dem Elektrofahrzeug verbunden wird.

Wenn ein Nutzer ein ihm zugeordnetes Fahrzeug an einem Ladepunkten einer Ladeinfrastruktur laden möchte, muss er sich dort authentifizieren. Ein weitverbreitetes Authentifizierungsverfahren sieht eine Verwendung einer RFID-Karte (Radio Frequency Identification) vor, welche üblicherweise auch als Ladekarte bezeichnet wird. Gegenüber anderen Authentifizierungsverfahren hat eine Verwendung solcher RFID-Karten als Authentifikationsmittel den Vorteil, dass die Authentifikation auch offline - also ohne Datenverbindung zwischen dem Ladepunkt und einer eine Mehrzahl von Nutzern verwaltenden abgesetzten Zentralstelle - möglich ist.

Bereits seit einiger Zeit ist es gängig, für eine Bewirtschaftung eines Ladepunkts zwischen einem Ladepunktbetreiber oder CPO (»Charge Point Operator«) und einem Elektromobilitätsanbieter oder EMP (»Electro Mobility Provider«) zu unterscheiden. Während der Elektromobilitätsanbieter traditionell einen festen Vertragspartner für den Nutzer bildet, der dem Nutzer einen Zugang zu unterschiedlichen Ladepunkten anbietet und die dort bezogene Ladeleistung in Rechnung stellt, ist der Ladepunktbetreiber für die technische Instandhaltung, die Stromversorgung und den Zugang zur Ladeinfrastruktur verantwortlich.

Bei einem vertragsbezogenen Zugang zur Ladeinfrastruktur hat der Nutzer eine vertragliche Beziehung zu einem Elektromobilitätsanbieter, der wiederum in vertraglicher Beziehung zu einem oder mehreren Ladepunktbetreibern steht, wobei ein Ladepunktbetreiber den zu nutzenden Ladepunkt betreibt. So ist sichergestellt, dass der Ladepunktbetreiber den Ladevorgang abrechnen kann. Der zu nutzende Ladepunkt ist wiederum nicht notwendigerweise auf Nutzer mit einer vertraglichen Beziehung zu einem bestimmten Elektromobilitätsanbieter beschränkt, sondern kann eine Autorisierung zum Ladevorgang auch Nutzern mit vertraglichen Beziehungen zu mindestens einem anderen Elektromobilitätsanbietern, vorzugsweise zu einer Mehrzahl von Elektromobilitätsanbietern gewährleisten.

Vor einer Autorisierung des Ladevorgangs muss sich der Nutzer zunächst an dem Ladepunkt seiner Wahl authentisieren, das heißt seine eigenen Identität unter Vorlage eines Authentifikationsmittels nachweisen. Nach Entnahme eines Identifikationsmerkmals aus dem Authentifikationsmittel erfolgt dann eine Übermittelung dieses Identifikationsmerkmals an eine Authentifizierungsstelle. In dieser Authentifizierungsstelle erfolgt eine Authentifizierung - also eine Verifikation der behaupteten Identität - durch einen Server desjenigen Elektromobilitätsanbieters, mit dem der Nutzer in einer vertraglichen Beziehung steht und von dem der Nutzer das Authentifikationsmittel zur Autorisierung von Ladevorgängen erhalten hat. Da der ausgewählte Ladepunkt nicht notwendigerweise auf Nutzer mit einer vertraglichen Beziehung zu einem bestimmten Elektromobilitätsanbieter beschränkt ist, wird das aus dem Authentifikationsmittel entnommene Identifikationsmerkmal derzeit an eine Mehrzahl von Servern übertragen. Üblicherweise wird das aus dem Authentifikationsmittel entnommene Identifikationsmerkmal an Server derjenigen Elektromobilitätsanbieter übertragen, mit dem der Ladepunktbetreiber des ausgewählten Ladepunkts in einer vertraglichen Beziehung steht. Eine einzig befähigte Authentifizierungsstelle - nämlich der Server desjenigen Elektromobilitätsanbieters, mit dem der Nutzer in einer vertraglichen Beziehung steht - ist dem Ladepunkt bzw. dem Ladepunktbetreiber nämlich nicht notwendigerweise bekannt, so dass alle dem Ladepunkt bzw. dem Ladepunktbetreiber bekannten Server mit einer Multicast-Anfrage und/der mit einer Mehrzahl an Unicast-Anfragen angefragt werden. Zusätzlich - falls vom Ladepunkt bzw. dem Ladepunktbetreiber angeboten - kann das entnommene Identifikationsmerkmal auch an Roamingplattformen übertragen werden, unter Vermittlung derer eine ad hoc auswählbare Vertragsbeziehung mit einem von mehreren Elektromobilitätsanbietern zur Abrechnung der Ladeleistung geschlossen werden kann.

Nach dem Stand der Technik ist es also üblich, dass von Seiten einer Steuerungssoftware des Ladepunkts oder eines Ladepunktbetreibers aus Server mehrerer Vertragspartner - d.h. Elektromobilitätsanbieter und gegebenenfalls Roamingplattformen - kontaktiert werden, wobei den Vertragspartnern das Identifikationsmerkmal oder eine andere Kundenkennung übermittelt wird und wobei die Vertragspartner um eine Authentifizierung des übermittelten Identifikationsmerkmals ersucht werden. Die Steuerungssoftware erwartet dabei üblicherweise genau eine positive Antwort, nämlich von der einzig befähigten Authentifizierungsstelle desjenigen Vertragspartners oder Elektromobilitätsanbieters, mit dem der Nutzer in einer vertraglichen Beziehung steht.

Die derzeit als Authentifikationsmittel eingesetzten RFID-Karten sind durch eine Benutzerkennung bzw. UID (User Identifier) individualisiert, welche als Identifikationsmerkmal bzw. Kundenkennung dient. Ungeachtet der Tatsache, dass die übertragene UID alleine - abgesehen von der einzig befähigten Authentifizierungsstelle - nicht notwendigerweise Rückschlüsse auf die Identität des Nutzers erlaubt, ist diese Multicast-Übermittlung an mehrere Server aus datenschutzrechtlichen Erwägungen problematisch, da jeder der Vertragspartner eines Ladepunkts oder eines Ladepunktbetreibers Nutzungs- und Bewegungsprofile beteiligter Nutzer erstellen kann, ohne dass die Nutzer Kenntnis von einer Weitergabe hätten, geschweige denn Zustimmung zu einer Weitergabe an die Mehrzahl von Vertragspartnern erklärt hätten.

Selbst ohne dass ein einzelnes Identifikationsmerkmal für sich unmittelbare Rückschlüsse auf die Identität erlauben würde, könnte eine Erhebung mehrerer Identifikationsmerkmale geeignet sein, personenbezogenen Daten abzuleiten oder mit Zusammenführung weiterer Daten zu plausibilisieren. Selbst eine Verarbeitung anonymer oder anonymisierter Daten mit dem Ziel einer (Kunden-)Profilbildung unterliegt in vielen Rechtsräumen rechtlichen Beschränkungen, zumal dann, wenn eine Zustimmung der Beteiligten nicht vorliegt. Eine missbräuchliche Erhebung personenbezogener Daten seitens eines widerrechtlich handelnden Vertragspartners wäre zudem schwierig nachzuweisen, da die Zulieferung der Daten mithilfe der derzeit praktizierten Multicast-Übertragung als technisch zwingend angesehen wird.

Die vorliegende Erfindung ist vor die Aufgabe gestellt, ein datensparsameres Verfahren zur Autorisierung eines Ladevorgangs anzugeben, mit dem eine missbräuchliche Verwendung von Identifikationsmerkmalen seitens eines Vertragspartners technisch unterbunden oder beschränkt wird.

Die Aufgabe wird durch ein Verfahren mit den Merkmalen des Patentanspruchs 1 gelöst.

Das erfindungsgemäße Verfahren zur Autorisierung eines Ladevorgangs an einem Ladepunkt sieht vor, ein von einem Authentifikationsmittel eines Nutzers übertragenes erstes Identifikationsmerkmal an einem Ladepunkt zu empfangenen und daraus ein erstes Abbildungsmerkmals zu bilden. Die Bildung dieses ersten Abbildungsmerkmals erfolgt durch Anwendung einer ersten Zuordnungsvorschrift auf das erste Identifikationsmerkmal.

Ein wesentlicher Kerngedanke der Erfindung besteht darin, nicht das sensible Identifikationsmerkmal selbst, sondern das gebildete Abbildungsmerkmal an eine oder mehrere Authentifizierungsstellen gesendet wird. Für diejenigen Authentifizierungsstellen, an denen der Nutzer nicht registriert ist, ist dieses Abbildungsmerkmal Bedeutung und wird z.B. von diesen verworfen. Für diejenigen - üblicherweise genau eine - Authentifizierungsstellen, bei welchen der Nutzer registriert ist, wird das Abbildungsmerkmal erfindungsgemäß dahingehend verwendet, dass eine Zuordnung zum registrierten Nutzer und dessen Authentisierung am Ladepunkt ermöglicht wird.

Hierzu lädt die jeweilige das Abbildungsmerkmal empfangende Authentifizierungsstelle eine von mehreren in der Authentifizierungsstelle gespeicherte zweite Identifikationsmerkmale,
und bildet aus einem jeweiligen zweiten Identifikationsmerkmal ein zweites Abbildungsmerkmals durch Anwendung einer zweiten Zuordnungsvorschrift auf das mindestens eine zweite Identifikationsmerkmal. Für jedes so gebildete zweite Abbildungsmerkmal erfolgt eine Prüfung, ob das gebildete zweite Abbildungsmerkmal mit dem ersten Abbildungsmerkmal übereinstimmt.

Besteht innerhalb einer bestimmten Authentifizierungsstelle Übereinstimmung zwischen den beiden Abbildungsmerkmalen, so heißt das, dass der gesuchte Nutzer eben an dieser bestimmten Authentifizierungsstelle registriert ist. Erfindungsgemäß wird diese Übereinstimmung an den Ladepunkt gemeldet, welcher in einem letzten Verfahrensschritt den Ladevorgang autorisiert.

Der Ladepunkt »weiß« nach Abschluss des erfindungsgemäßen Verfahrens, dass der aktuelle Nutzer von einer Authentifizierungsstelle authentisiert ist und der Ladepunkt »weiß« insbesondere auch, an welcher der vom Ladepunkt angefragten Authentifizierungsstellen der Nutzer authentisiert ist. Die letzte Information kann insbesondere für Abrechnungszwecke wichtig sein, nämlich für eine Inrechnungstellung einer vom Nutzer bezogenen Ladenergie seitens einem diesen Ladepunkt betreibenden Ladepunktbetreiber oder CPO mit dem die Authentifizierungsstelle betreibenden Elektromobilitätsanbieter oder EMP. Innerhalb diesem erfindungsgemäßen Rahmens gibt es nun zwei Varianten, das erfindungsgemäße Verfahren durchzuführen.

In einer ersten Variante wird ein wesentlicher Anteil eines Rückschlusses vom zweiten Abbildungsmerkmal auf den Nutzer auf Seiten der Authentifizierungsstelle durchgeführt. Als Ergebnis des Rückschlusses wird von der Authentifizierungsstelle ein dem zweiten Abbildungsmerkmal entsprechendes zweites Identifikationsmerkmal an den Ladepunkt übertragen, welches im Ladepunkt auf Übereinstimmung mit dem ursprünglich vom Authentifikationsmittel empfangenen ersten Identifikationsmerkmal überprüft wird.

In einer zweiten Variante wird ein wesentlicher Anteil eines Rückschlusses vom zweiten Abbildungsmerkmal auf den Nutzer auf Seiten des Ladepunkts durchgeführt. Die Authentifizierungsstelle prüft, ob eine Übereinstimmung zwischen dem mindestens einen in der Authentifizierungsstelle gebildeten zweiten Abbildungsmerkmal und dem ersten von der Abbildungsmerkmal empfangenen Abbildungsmerkmal gegeben ist und überträgt bei Vorliegen einer Übereinstimmung das zweite Abbildungsmerkmal - aufgrund der Übereinstimmung des ersten und des zweiten Abbildungsmerkmals ist es hier gleichbedeutend zu sagen, dass das erste Abbildungsmerkmal übertragen wird - an den Ladepunkt.

Dieses zweite Abbildungsmerkmal wird also nur dann an den Ladepunkt übertragen, wenn es zum zweiten Abbildungsmerkmal auf Seiten der Authentifizierungsstelle einen »Treffer« gibt, was bedeutet, dass ein dem zweiten Abbildungsmerkmal entsprechender Benutzer an der Authentifizierungsstelle registriert ist. Im Ladepunkt wird aus einem oder mehreren dort zwischengespeicherten ersten Identifikationsmerkmalen durch Anwendung der ersten Zuordnungsvorschrift ein jeweiliges erstes Abbildungsmerkmal gebildet. Für jedes so gebildete erste Abbildungsmerkmal erfolgt eine Prüfung, ob das gebildete erste Abbildungsmerkmal mit dem von der Authentifizierungsstelle empfangenen zweiten Abbildungsmerkmal übereinstimmt. Als Ergebnis des Rückschlusses wird vom Ladepunkt also ein dem zweiten Abbildungsmerkmal entsprechendes erstes Identifikationsmerkmal ermittelt.

Die Übertragung des zweiten Abbildungsmerkmals - gemäß der zweiten Variante - oder des zweiten Identifikationsmerkmals Abbildungsmerkmals - gemäß der ersten Variante - an den Ladepunkt kann optional mit einem Authentisierungsdatum versehen sein, welcher zusätzlich bestätigt, dass tatsächlich ein dem zweiten Abbildungsmerkmal oder ein dem zweiten Identifikationsmerkmal entsprechender Benutzer an der Authentifizierungsstelle registriert ist.

Die Übertragung des zweiten Abbildungsmerkmals an den Ladepunkt kann optional mit einem die sendende Authentifizierungsstelle charakterisierenden bzw. identifizierenden Herkunftsdatum versehen sein.

Die oben beschriebene optionale Aufnahme eines Authentisierungsdatums und/oder Herkunftsdatum bei der Übertragung einer entsprechenden - ansonsten weitgehend beliebig gestalteten - Nachricht an den Ladepunkt sind aber zumindest dann erlässlich, wenn seitens des Ladepunkts eine sequentielle Nachverfolgung ausgetauschter Nachrichten erfolgt, so dass eine Antwort - beispielsweise - aufgrund einer sequentiellen Folge zwingend der vorausgehenden Anfrage zuordenbar ist.

Eine Beachtung der sequentiellen Folge kann auch einen Rückschluss vom zweiten Abbildungsmerkmal auf den Nutzer in der oben beschriebenen zweiten Variante vereinfachen. Im Ladepunkt wird dazu das aktuelle erste Abbildungsmerkmal, welches durch Anwendung der ersten Zuordnungsvorschrift aus dem ersten Identifikationsmerkmal gebildet wurde, so lange in einem Zwischenspeicher bzw. Rechenregister behalten, bis ein von einer Authentifizierungsstelle übertragenes zweites Abbildungsmerkmal auf eine Anfrage zum ersten Abbildungsmerkmal eingetroffen ist. Ein eingetroffenes zweites Abbildungsmerkmal ist unter Beachtung der sequentiellen Reihenfolge dann nämlich eine zustands-plausibilisierte Konsequenz der vorausgehenden Anfrage, nämlich der Übertragung des ersten Abbildungsmerkmals an die mindestens eine Authentifizierungsstelle. Das eingetroffene zweites Abbildungsmerkmal kann als Folge dieser Konsequenz mit dem zwischengespeicherten ersten Abbildungsmerkmal dann unmittelbar auf Übereinstimmung geprüft werden, ohne dass bei einem nicht zustands-plausibilisierten Eintreffen eines zweites Abbildungsmerkmal erst aus mehreren im Ladepunkt zwischengespeicherten ersten Identifikationsmerkmalen durch Anwendung der ersten Zuordnungsvorschrift ein jeweiliges erstes Abbildungsmerkmal gebildet werden müsste und für jedes so gebildete erste Abbildungsmerkmal eine getrennte Prüfung erfolgen müsste, ob das gebildete erste Abbildungsmerkmal mit dem von der Authentifizierungsstelle empfangenen zweiten Abbildungsmerkmal übereinstimmt.

Das erfindungsgemäße Verfahren zur Autorisierung eines Ladevorgangs an einem Ladepunkt gemäß der ersten Variante umfasst folgende Schritte:
a) Aufbau einer Schnittstelle (IF) zwischen einem Authentifikationsmittel (ATD) eines Nutzers (USR) und dem Ladepunkt (CP) und Übertragung eines im Authentifikationsmittel (ATD) gespeicherten ersten Identifikationsmerkmals (ID1) an den Ladepunkt (CP);
b) Bildung eines ersten Abbildungsmerkmals (IM1) durch Anwendung einer ersten Zuordnungsvorschrift (MP1) auf das erste Identifikationsmerkmal (ID1) und Übertragung des ersten Abbildungsmerkmals (IM1) an mindestens eine Authentifizierungsstelle (EMP);
c) Laden mindestens eines in der mindestens einen Authentifizierungsstelle (EMP) gespeicherten zweiten Identifikationsmerkmals (ID2), Bildung mindestens eines zweiten Abbildungsmerkmals (IM2) durch Anwendung einer zweiten Zuordnungsvorschrift (MP2) auf das mindestens eine zweite Identifikationsmerkmal (ID2) und Prüfung (EQ1) einer Übereinstimmung zwischen dem mindestens einen zweiten Abbildungsmerkmal (IM2) und dem ersten Abbildungsmerkmal (IM1) ;
d) im Fall eines übereinstimmenden zweiten Abbildungsmerkmals (IM2), Übertragung des dem übereinstimmenden zweiten Abbildungsmerkmal (IM2) zugeordneten zweiten Identifikationsmerkmals (ID2) von der Authentifizierungsstelle (EMP) an den Ladepunkt (CP);
e) Prüfung (EQ2) einer Übereinstimmung zwischen dem zweiten Identifikationsmerkmal (ID2) und dem ersten Identifikationsmerkmal (ID1); und;
f) Autorisierung des Ladevorgangs im Fall eines übereinstimmenden zweiten Identifikationsmerkmals (ID2).

Das erfindungsgemäße Verfahren zur Autorisierung eines Ladevorgangs an einem Ladepunkt gemäß der zweiten Variante umfasst folgende Schritte:
a) Aufbau einer Schnittstelle (IF) zwischen einem Authentifikationsmittel (ATD) eines Nutzers (USR) und dem Ladepunkt (CP) und Übertragung eines im Authentifikationsmittel (ATD) gespeicherten ersten Identifikationsmerkmals (ID1) an den Ladepunkt (CP);
b) Bildung eines ersten Abbildungsmerkmals (IM1) durch Anwendung einer ersten Zuordnungsvorschrift (MP1) auf das erste Identifikationsmerkmal (ID1) und Übertragung des ersten Abbildungsmerkmals (IM1) an mindestens eine Authentifizierungsstelle (EMP);
c) Laden mindestens eines in der mindestens einen Authentifizierungsstelle (EMP) gespeicherten zweiten Identifikationsmerkmals (ID2), Bildung mindestens eines zweiten Abbildungsmerkmals (IM2) durch Anwendung einer zweiten Zuordnungsvorschrift (MP2) auf das mindestens eine zweite Identifikationsmerkmal (ID2) und Prüfung (EQ1) einer Übereinstimmung zwischen dem mindestens einen zweiten Abbildungsmerkmal (IM2) und dem ersten Abbildungsmerkmal (IM1) ;
d) im Fall eines übereinstimmenden zweiten Abbildungsmerkmals (IM2), Übertragung des zweiten Abbildungsmerkmal (IM2) von der Authentifizierungsstelle (EMP) an den Ladepunkt (CP);
e) Laden mindestens eines im Ladepunkt (CP) gespeicherten ersten Identifikationsmerkmals (ID1), Bildung mindestens eines ersten Abbildungsmerkmals (IM1) durch Anwendung der ersten Zuordnungsvorschrift (MP1) auf das mindestens eine erste Identifikationsmerkmal (ID1) und Prüfung (EQ3) einer Übereinstimmung zwischen dem mindestens einen ersten Abbildungsmerkmal (IM1) und dem zweiten Abbildungsmerkmal (IM2) ;
f) Autorisierung des Ladevorgangs im Fall eines übereinstimmenden zweiten Abbildungsmerkmal (IM2).

Das erfindungsgemäße Verfahren zeichnet sich durch eine Umkehr der Übermittlungsrichtung für das schützenswerte Identifikationsmerkmal aus. Das Identifikationsmerkmal wird nicht mehr vom Ladepunkt an mehrere Server von Authentifizierungsstellen, welche von Vertragspartner bzw. Elektromobilitätsprovider betrieben werden, gesendet. Hierdurch wird eine Erstellung von Nutzungs- bzw. Bewegungsprofilen durch Dritte in vorteilhafter Weise deutlich erschwert bzw. verhindert.

Im Gegensatz zu aus dem Stand der Technik bekannten Verfahren zur Bereitstellung der benötigten Metadaten oder eines Zusatzdatensatzes auf dem Authentifikationsmittel, beispielsweise RFID-Karte, ermöglicht die Erfindung eine Nutzung von RFID-Karten ohne Erweiterung. Damit können alle möglichen RFID-Karten, auch ältere Bestandskarten, ausländische RFID-Karten sowie grundsätzlich auch ähnliche Authentifikationsmittel, wie amtliche Lichtbildausweise zur Anwendung kommen. Die Erfindung betrifft im Weiteren eine Autorisierungseinrichtung mit den Merkmalen des Patentanspruchs 12.

Die erfindungsgemäße Autorisierungseinrichtung zur Autorisierung eines Ladevorgangs an einem Ladepunkt umfasst:
- ein Schnittstellenmodul zur Einrichtung einer Schnittstelle (IF) mit einem Authentifikationsmittel (ATD) eines Nutzers (USR) und zur Entgegennahme eines im Authentifikationsmittel (ATD) gespeicherten ersten Identifikationsmerkmals (ID1);
- ein Authentifizierungsmodul zur Bildung eines ersten Abbildungsmerkmals (IM1) durch Anwendung einer ersten Zuordnungsvorschrift (MP1) auf das erste Identifikationsmerkmal (ID1) und zur Übertragung des ersten Abbildungsmerkmals (IM1) an mindestens eine Authentifizierungsstelle (EMP);
das Authentifizierungsmodul eingerichtet:
a) zur Entgegennahme eines zweiten Identifikationsmerkmals (ID2), zur Prüfung (EQ2) einer Übereinstimmung zwischen dem zweiten Identifikationsmerkmal (ID2) und dem ersten Identifikationsmerkmal (ID1) und zur Autorisierung des Ladevorgangs im Fall eines übereinstimmenden zweiten Identifikationsmerkmals (ID2); und/oder;
b) zur Entgegennahme eines zweiten Abbildungsmerkmals (IM2), zur Prüfung (EQ3) einer Übereinstimmung zwischen dem ersten Abbildungsmerkmal (IM1) und dem zweiten Abbildungsmerkmal (IM2) und zur Autorisierung des Ladevorgangs im Fall eines übereinstimmenden zweiten Abbildungsmerkmals (IM2); und/oder;
c) zur Entgegennahme eines zweiten Abbildungsmerkmals (IM2), zum Laden mindestens eines im Ladepunkt (CP) gespeicherten ersten Identifikationsmerkmals (ID1), zur Bildung mindestens eines ersten Abbildungsmerkmals (IM1) durch Anwendung der ersten Zuordnungsvorschrift (MP1) auf das mindestens eine erste Identifikationsmerkmal (ID1) und Prüfung (EQ3) einer Übereinstimmung zwischen dem mindestens einen ersten Abbildungsmerkmal (IM1) und dem zweiten Abbildungsmerkmal (IM2) und zur Autorisierung des Ladevorgangs im Fall eines übereinstimmenden zweiten Abbildungsmerkmals (IM2).

Das Authentifizierungsmodul ist also konfigurierbar auf eine, mehrere oder alle der oben genannten Alternativen a), b) und oder c) eingerichtet. Eine erste Alternative a) sieht eine Entgegennahme des zweiten Identifikationsmerkmals zur Abarbeitung eines erfindungsgemäßen Verfahrens gemäß der oben erläuterten ersten Variante vor. Eine dritte Alternative c) sieht eine Entgegennahme des zweiten Abbildungsmerkmals zur Abarbeitung eines erfindungsgemäßen Verfahrens gemäß der oben erläuterten zweiten Variante vor. Auch eine zweite Alternative b) sieht eine Entgegennahme des zweiten Abbildungsmerkmals vor, allerdings erfolgt die Abarbeitung des erfindungsgemäßen Verfahrens anhand eines gegenüber der dritte Alternative c) vereinfachten Verfahrens, bei dem das zweite Abbildungsmerkmal mit dem zwischengespeicherten ersten Abbildungsmerkmal auf Übereinstimmung geprüft wird, ohne dass das erste Abbildungsmerkmal zuvor aus einem der Mehrzahl von ersten Identifikationsmerkmalen gebildet wurde. In der Autorisierungseinrichtung des Ladepunkts wurde hierzu das aktuelle erste Abbildungsmerkmal, welches durch Anwendung der ersten Zuordnungsvorschrift aus dem ersten Identifikationsmerkmal gebildet wurde, so lange in einem Zwischenspeicher bzw. Rechenregister behalten, bis das von der Authentifizierungsstelle übertragenes zweite Abbildungsmerkmal auf die Anfrage zum ersten Abbildungsmerkmal eingetroffen ist. Wie oben erläutert ist in diesem vereinfachten Verfahren gemäß der zweite Alternative b) das eingetroffene zweites Abbildungsmerkmal unter Beachtung der sequentiellen Reihenfolge eine zustands-plausibilisierte Konsequenz der vorausgehenden Anfrage, nämlich der Übertragung des ersten Abbildungsmerkmals an die mindestens eine Authentifizierungsstelle.

Weitere Ausgestaltungen der Erfindung sind Gegenstand der abhängigen Patentansprüche.

Gemäß einer Ausgestaltung des erfindungsgemäßen Verfahrens ist vorgesehen, dass im Ladepunkt nach Empfang des von der Authentifizierungsstelle übertragenen zweiten Identifikationsmerkmals - gemäß der ersten Variante - oder nach Empfang des von der Authentifizierungsstelle übertragenen zweiten Abbildungsmerkmals - gemäß der zweiten Variante - ein die sendende Authentifizierungsstelle charakterisierendes Herkunftsdatum ermittelt wird. Das Herkunftsdatum wird bevorzugt seitens des Ladepunkts ermittelt. Bereits die Übertragung des zweiten Abbildungsmerkmals an den Ladepunkt kann optional oder auch in Ergänzung des oben gesagten mit einem die sendende Authentifizierungsstelle charakterisierenden bzw. identifizierenden Herkunftsdatum versehen sein.

Gemäß einer Ausgestaltung des erfindungsgemäßen Verfahrens ist vorgesehen, dass das Herkunftsdatum im Ladepunkt für eine Zuordnung zum ersten Identifikationsmerkmal hinterlegt wird. Diese Hinterlegung einer Zuordnung erleichtert das Vorgehen nach einer erstmaligen Durchführung des erfindungsgemäßen Verfahrens mit einer Authentifizierung eines bestimmten Authentifikationsmittels durch eine bestimmten Authentifizierungsstelle dahingehend, dass ein diese bestimmte Authentifizierungsstelle bereits im ersten Identifikationsmerkmal hinterlegtes charakterisierendes Herkunftsdatum dazu führt, dass die erfindungsgemäße Übertragung des ersten Abbildungsmerkmals bei einem wiederholten Authentifikationsvorgang - also einer erneuten Authentifizierung mit demselben Authentifikationsmittel - nicht an mehrere Authentifizierungsstellen erfolgen muss, sondern (zunächst) nur an die bestimmten Authentifizierungsstelle.

Im Einklang mit dem oben gesagten ist gemäß einer Ausgestaltung des erfindungsgemäßen Verfahrens vorgesehen, dass nach der Übertragung des im Authentifikationsmittel gespeicherten ersten Identifikationsmerkmals an den Ladepunkt also zunächst geprüft wird, ob im Ladepunkt ein charakterisierendes Herkunftsdatum zu dem ersten Identifikationsmerkmal hinterlegt ist. Ist dies der Fall, kann sich die erfindungsgemäße Übertragung des ersten Abbildungsmerkmals auf die durch das Herkunftsdatum bestimmte Authentifizierungsstelle beschränken. Je nach Sicherheitsanforderungen des Ladepunkts kann sogar anhand der Tatsache, dass eine Authentisierung bereits durch ein zu dem ersten Identifikationsmerkmal hinterlegten Herkunftsdatum belegt ist, durch eine Softwareroutine des Ladepunkts entschieden werden, dass diese Authentisierung - zumindest innerhalb eines bestimmten Zeitraums - ausreichend ist und somit eine Autorisierung des Ladevorgangs unter Auslassung der erfinderischen Verfahrensschritte b) bis f) erfolgen kann. Ein derart abgewandeltes Verfahren unter Auslassung der erfinderischen Verfahrensschritte b) bis f) ist zwar nicht im Schutzbereich der Erfindung, die vorausgehende Anwendung aller erfinderischen Schritte gewährleistet jedoch ein darauffolgendes vereinfachtes Verfahren unter Auslassung der erfinderischen Verfahrensschritte b) bis f).

Gemäß einer Ausgestaltung des erfindungsgemäßen Verfahrens ist vorgesehen, dass die Authentifizierungsstelle nach Empfang des ersten Abbildungsmerkmals ein den sendenden Ladepunkt charakterisierendes Herkunftsdatum ermittelt. Nach dieser Ausgestaltung ermittelt also - in analoger Ausgestaltung zur vorbesagten Ausgestaltung, bei der eine des Herkunftsdatum durch den Ladepunkt erfolgt - die Authentifizierungsstelle ein Herkunftsdatum. Auch für diese Ausgestaltung gilt, dass bereits der Ladepunkt vor Übertragung des ersten Abbildungsmerkmals eine entsprechende der Übertragung dienende Nachricht mit einem den sendenden Ladepunkt charakterisierenden bzw. identifizierenden Herkunftsdatum versehen kann.

Gemäß einer Ausgestaltung des erfindungsgemäßen Verfahrens ist vorgesehen, das den sendenden Ladepunkt charakterisierende Herkunftsdatum in der Authentifizierungsstelle für eine Zuordnung zu dem zum ersten Abbildungsmerkmals identischen zweiten Abbildungsmerkmal zu hinterlegen. Diese Hinterlegung einer Zuordnung erleichtert das Vorgehen nach einer erstmaligen Durchführung des erfindungsgemäßen Verfahrens mit einer Authentifizierung eines bestimmten Authentifikationsmittels durch eine bestimmte Authentifizierungsstelle dahingehend, dass ein im Abbildungsmerkmal hinterlegtes Herkunftsdatum - oder auch ein beliebiger Kenner - dazu führt, dass sich eine aufwändige Bildung mehrerer jeweiliger zweiter Abbildungsmerkmale auf Seiten der Authentifizierungsstelle eventuell vermeiden oder zumindest vom Aufwand her verringern lässt, indem vorzugsweise zunächst diejenigen mit einem Herkunftsdatum markierten zweiten Abbildungsmerkmale mit dem empfangen ersten Abbildungsmerkmal verglichen werden.

Gemäß einer Ausgestaltung des erfindungsgemäßen Verfahrens ist vorgesehen, dass nach Empfang des ersten Abbildungsmerkmals in der Authentifizierungsstelle geprüft wird, ob dort ein den sendenden Ladepunkt charakterisierendes Herkunftsdatum zu dem mit dem ersten Abbildungsmerkmal übereinstimmenden Abbildungsmerkmal hinterlegt ist. Ist dies der Fall, kann sich das weitere Verfahren auf einen Abgleich des Herkunftsdatums beschränken.

Gemäß einer Ausgestaltung des erfindungsgemäßen Verfahrens ist vorgesehen, dass bei Vorliegen eines den sendenden Ladepunkt charakterisierendes Herkunftsdatums der Verfahrensschritt c) übersprungen wird. Bei Vorliegen eines den sendenden Ladepunkt charakterisierendes Herkunftsdatums kann also ein wiederholtes Laden eines zweite Identifikationsmerkmals, eine Bildung eines jeweiligen zweiten Abbildungsmerkmals auf das geladene zweites Identifikationsmerkmal sowie eine Prüfung einer Übereinstimmung zwischen dem aktuell gebildeten zweiten Abbildungsmerkmal und dem ersten Abbildungsmerkmal übersprungen werden.

Gemäß einer Ausgestaltung des erfindungsgemäßen Verfahrens ist vorgesehen, dass die erste Zuordnungsvorschrift und die zweite Zuordnungsvorschrift bei jeweils gleichen Identifikationsmerkmalen zu einem gleichen Abbildungsmerkmal führen. Alternativ sind die erste Zuordnungsvorschrift und die zweite Zuordnungsvorschrift identische Funktionen.

Gemäß einer Ausgestaltung des erfindungsgemäßen Verfahrens ist vorgesehen, dass die erste Zuordnungsvorschrift und die zweite Zuordnungsvorschrift jeweils Einwegfunktionen sind. Eine Einwegfunktion ist eine mathematische Funktion, die einfach berechenbar, aber nur äußerst aufwändig umzukehren ist. Als Einwegfunktion werden auch mathematische Funktionen bezeichnet, zu denen bisher keine in angemessener Zeit praktisch ausführbare Umkehrung bekannt ist. Im Sinne dieser Beschreibung werden als Einwegfunktionen auch Einwegfunktionen mit Falltür bzw. Trapdoor-Einwegfunktionen verstanden. Diese lassen sich nur bei Kenntnis von Zusatzinformationen mit angemessenen Rechenaufwand umkehren. Beispielsweise ist eine Faktorisierung einer großen Zahl, also ihre Zerlegung in ihre Primfaktoren, sehr aufwändig, während das Erzeugen einer Zahl durch Multiplikation von Primzahlen einfach berechenbar ist. Im Sinne dieser Beschreibung werden als Einwegfunktionen auch in asymmetrischen Verschlüsselungsverfahren eingesetzte Falltürfunktionen wie zum Beispiel RSA bezeichnet. Eine Verschlüsselung oder eine Signatur mit RSA basiert auf einer Einwegpermutation mit Falltür bzw. TOWP (trapdoor one-way permutation). Die Einwegeigenschaft von TOWP wird in vorteilhafter Weise eingesetzt, um eine Umkehrung, also eine Bildung eines Identifikationsmerkmals aus einem Abbildungsmerkmal ohne einen geheimen Schlüssel - die Falltür - nahezu unmöglich ist.

Gemäß einer Ausgestaltung werden für die erste und die zweite Zuordnungsvorschrift jeweils kryptographische Hashfunktionen verwendet. Gemäß einer Ausgestaltung werden kryptographische Hashfunktion verwendet, welche mit einem sogenannten »Salt« ergänzt sind. Eine kryptographischen Hashfunktion wird im Sinne dieser Beschreibung als Einwegfunktion verstanden, da auch für kryptographischen Hashfunktionen kein mit angemessenen Rechenaufwand praktikabler Weg bekannt ist, ein Identifikationsmerkmal zu einer gegebenen Abbildungsmerkmal effizient zu berechnen.

Gemäß einer Ausgestaltung erfolgt eine Prüfung nicht durch Vergleich der in einem »Klartext« vorliegenden Identifikationsmerkmale, sondern durch Vergleich deren Abbildungsmerkmalen, also den Hashwerten der Identifikationsmerkmale. Dadurch kann ein Unberechtigter keinen Zugriff auf die Identifikationsmerkmale erlangen.

Im Folgenden werden weitere Ausführungsbeispiele und Vorteile der Erfindung anhand der Zeichnung näher erläutert. Dabei zeigen:
- FIG 1:: eine schematische Strukturdarstellung eines Datenaustauschs zwischen mehreren Ladeinfrastrukturkomponenten gemäß einer ersten Variante der Erfindung, und;
- FIG 2:: eine schematische Strukturdarstellung eines Datenaustauschs zwischen mehreren Ladeinfrastrukturkomponenten gemäß einer zweiten Variante der Erfindung.

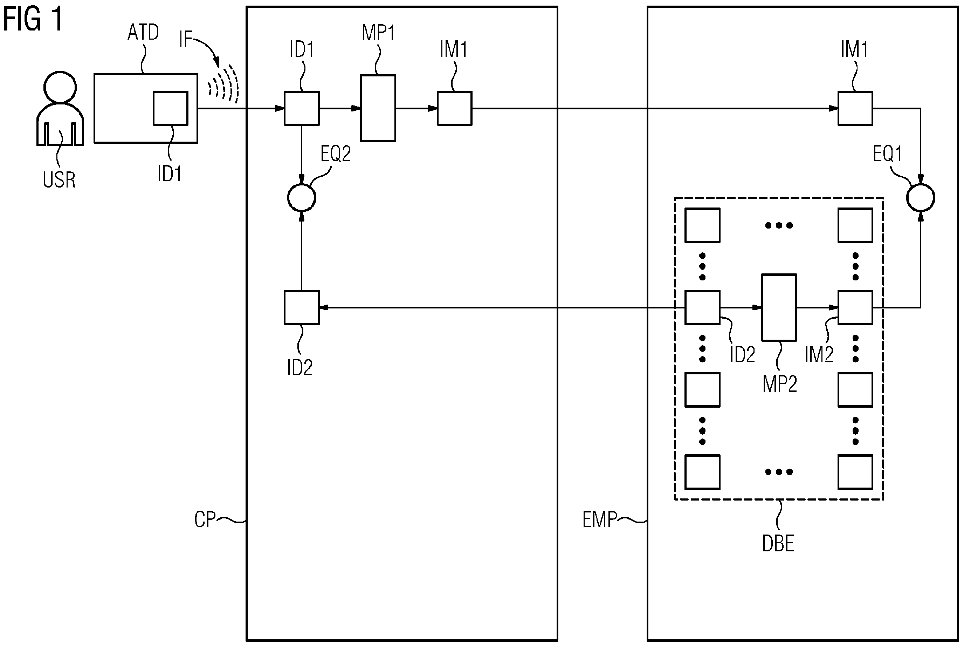

FIG 1 zeigt einen schematischen, nicht notwendigerweise maßstabsgetreuen Ausschnitt einer Ladeinfrastruktur. Hierzu umfasst die Ladeinfrastruktur einen Ladepunkt CP, an dem das - zeichnerisch nicht dargestellte - Elektrofahrzeug eines Nutzers USR des Ladepunkts CP über ein entsprechendes - zeichnerisch nicht dargestelltes - Ladekabel angeschlossen oder auch über entsprechende entsprechendes - zeichnerisch nicht dargestellte - Einrichtungen für einen drahtlose Energieaustausch induktiv gekoppelt wird.

Ein Nutzer USR verfügt über ein Authentifikationsmittel ATD, mit dem über eine Schnittstelle IF eine bidirektionale Datenkommunikation mit dem Ladepunkt CP aufbau- und betreibbar ist.

Das Authentifikationsmittel ATD ist beispielsweise in Form einer Chipkarte, Schlüsselkarte, Smartcard, Integrated Circuit Card (ICC) oder als ein mobiles Endgerät des Nutzers USR in Verbindung mit einer auf dem mobilen Endgerät zum Ablauf gebrachten Applikation verkörpert. Alternativ oder zusätzlich ist das Authentifikationsmittel ATD in einem digitalen Endgerät wie z.B. Smart Phone, Smart Watch, etc. integriert, diesen zugeordnet und/oder in diesen verkörpert. Das Authentifikationsmittel ATD ist zum Aufbau, Nutzung und/oder Betrieb einer beliebigen Schnittstelle IF, insbesondere einer Nahfeldschnittstelle und/oder einer Luftschnittstelle fähig. Zur Ausbildung einer Nahfeldschnittstelle und/oder einer Luftschnittstelle kommen insbesondere Protokolle und Techniken wie z.B. NFC (Near Field Communication), RFID (Radio-Frequency Identification), Bluetooth, WLAN (Wireless Local Area Network) etc. zum Einsatz.

Das Authentifikationsmittel ist im vorliegenden Ausführungsbeispiel eine RFID-Chipkarte oder ein mobiles Endgerät des Nutzers USR in Verbindung mit einer auf dem mobilen Endgerät zum Ablauf gebrachten Applikation. Die Schnittstelle IF ist im vorliegenden Ausführungsbeispiel eine Nahfeldschnittstelle IF.

Ein erfindungsgemäßes Authentifikationsmittel ATD zur Autorisierung des Ladevorgangs umfasst einen - zeichnerisch nicht dargestellten - Speicherbereich, in dem mindestens ein Identifikationsmerkmal ID1 des Nutzers USR gespeichert sind. Weiterhin dient eine - zeichnerisch nicht dargestellten - Schnittstelleneinheit zum Aufbau und zum Betrieb einer Nahfeldschnittstelle IF und zur Übertragung des mindestens einen Identifikationsmerkmal ID1 an den Ladepunkt CP. Dieses mindestens eine Identifikationsmerkmal ID1 ist optional mit einem Signaturschlüssel signiert. Zur ladepunktseitigen Authentifizierung des Nutzers USR kann zusätzlich oder alternativ ein - nicht dargestelltes - digitales Zertifikat verwendet werden.

Wenn der Nutzer ein ihm zugeordnetes Fahrzeug an einem Ladepunkt CP einer Ladeinfrastruktur laden möchte, muss er sich in zeitgemäßen Ladeinfrastrukturen nicht nur gegenüber dem Ladepunkt CP authentifizieren, sondern auch gegenüber einem oder mehreren Vertragsparteien auf die im Folgenden verallgemeinernd mit dem Begriff Elektromobilitätsanbieter eingegangen wird.

Bereits seit einiger Zeit ist es gängig, für eine Bewirtschaftung eines Ladepunkts zwischen einem Ladepunktbetreiber oder CPO (»Charge Point Operator«) und einem Elektromobilitätsanbieter EMP (»Electro Mobility Provider«) zu unterscheiden. Während der Elektromobilitätsanbieter oder EMP traditionell einen festen Vertragspartner für den Nutzer bildet, der dem Nutzer einen Zugang zu unterschiedlichen Ladepunkten CP anbietet und die dort bezogene Ladeleistung in Rechnung stellt, ist der Ladepunktbetreiber für die technische Instandhaltung, die Stromversorgung und den Zugang zur Ladeinfrastruktur verantwortlich.

Fortschritte in der Digitalisierung führen daher dazu, dass eine Vertragsbeziehung zwischen einem Nutzer USR und einem Elektromobilitätsanbieter zunehmend indirekter wird und auf diese Weise indirekten Vertragsbeziehungen den Weg ebnen, welche in der Fachwelt - in Anlehnung an ein bekanntes Roaming in der Mobilkommunikation - auch als »E-Roaming« bezeichnet werden. E-Roaming ermöglicht es einem Nutzer USR, sein Elektrofahrzeug an Ladepunkten CP zu laden, welche nicht notwendigerweise durch den Elektromobilitätsanbieter EMP selbst betrieben werden. Ferner besteht auch nicht notwendigerweise eine vorab geschlossene Vertragsbeziehung zwischen dem Ladepunktbetreiber solcher Ladepunkte CP mit einem einzigen Elektromobilitätsanbieter.

Bei einem Ladevorgang und dessen Autorisierung - also der Entscheidung, ob der Ladevorgang ermöglicht wird - sind daher meist drei Parteien - Nutzer USR, Ladepunktbetreiber, Elektromobilitätsanbieter - zu berücksichtigen. Dabei ist zu unterscheiden zwischen einer Autorisierung für Nutzer USR, die einen Vertrag mit einem Elektromobilitätsanbieter oder auch einem E-Roaming-Partner haben sowie einer Autorisierung für Nutzer, die keine solche vertragliche Bindung haben. Soweit zwischen dem Elektromobilitätsanbieter und dem Ladepunktbetreiber keine unmittelbare Verbindung besteht, wie dies beispielsweise beim Roaming auftreten kann, gibt es entsprechend weitere Parteien. Für die ausschließlich technischen Belange in dieser Beschreibung gelten auch weitere Parteien sowie eventuelle indirekte Partien verallgemeinernd durch den Elektromobilitätsanbieter umfasst.

Bei einem vertragsbezogenen Zugang zur Ladeinfrastruktur hat der Nutzer USR eine vertragliche Beziehung zu einem Elektromobilitätsanbieter, der wiederum in vertraglicher Beziehung zum Ladepunktbetreiber des zu nutzenden Ladepunkts CP steht. So ist sichergestellt, dass der Ladepunktbetreiber den Ladevorgang abrechnen kann.

Neben anderen Authentifikationsmittel ATD hat sich in der Elektromobilität die Nutzung von RFID-Karten zur Authentisierung eines zugehörigen Nutzers etabliert. Als Identifikationsmerkmal ID1 wird beispielsweise ein Unique Identifier oder UID des Authentifikationsmittel ATD, also eine idealerweise eindeutige Seriennummer, die die RFID-Karte identifiziert. Nach dem Aufbau einer Nahfeldschnittstelle IF zwischen dem Authentifikationsmittel ATD und dem Ladepunkt CP erfolgt die Übertragung des im Authentifikationsmittel ATD gespeicherten ersten Identifikationsmerkmals ID1 an den Ladepunkt CP.

Es ist künftig geplant, weitere oder andere Arten von Identifikationsmerkmalen zu verwenden, jedoch auch künftig von einer Hinterlegung und/oder Übermittlung weiterer Metainformationen - im Gegensatz zu Verfahren wie beispielsweise Plug & Charge gemäß ISO15118 - abzusehen, insbesondere also keine Metainformationen hinsichtlich der kartenausgebenden Stelle oder des Vertragspartners bzw. Elektromobilitätsanbieter EMP des Nutzers USR auf dem Authentifikationsmittel ATD zu hinterlegen.

Aus diesem Grund kann der Ladepunkt CP oder auch ein mit dem Ladepunkt in kommunikativer Verbindung stehender - nicht dargestellter - Server des Ladepunktbetreibers bzw. CPO einen bestimmten Ladevorgang, bzw. eine Autorisierungsanfrage zwar einem Nutzer USR zuordnen, soweit er aber nicht selbst in der Rolle des Elektromobilitätsanbieters EMP ist, diesen Nutzer USR aber nicht unmittelbar feststellen.

Gemäß einem Ausführungsbeispiel der Erfindung ist vorgesehen, dass das erste Identifikationsmerkmal ID1 zunächst lokal in einem - zeichnerisch nicht dargestellten - Speicherbereich des Ladepunkts CP gespeichert wird. Eine Kopie des ersten Abbildungsmerkmal IM1 wird anschließend einer - zeichnerisch nicht dargestellten - Steuerungseinheit des Ladepunkts CP übergeben, in der eine Bildung eines ersten Abbildungsmerkmals IM1 erfolgt. Das erste Abbildungsmerkmal IM1 wird durch Anwendung einer ersten Zuordnungsvorschrift MP1 auf das erste Identifikationsmerkmal ID1 gebildet. Anschließend wird auch erste Abbildungsmerkmal IM1 lokal in einem - zeichnerisch nicht dargestellten - Speicherbereich des Ladepunkts CP gespeichert. Die Speicherung des ersten Abbildungsmerkmals IM1 erfolgt vorzugsweise so, dass eine Zuordnung des ersten Abbildungsmerkmals IM1 zu dessen bildgebenden ersten Identifikationsmerkmal ID1 ermöglicht ist.

Die Bildung des Abbildungsmerkmals IM1 kann beispielsweise so erfolgen, dass die ersten Zuordnungsvorschrift MP1 auf einem Teil des ursprünglichen ersten Identifikationsmerkmals ID1 angewandt wird. Alternativ wird die ersten Zuordnungsvorschrift MP1 auf das gesamte erste Identifikationsmerkmal ID1 angewandt.

Die erste Zuordnungsvorschrift MP1 ist zum Beispiel eine mathematische Operation oder eine mathematische Funktion, z.B. eine Hash-Funktion. Bei Nutzung einer mathematischen Funktion kann vorgesehen sein, dass deren Parameter abhängig von einer Zeit oder einem Adressaten geändert werden, beispielsweise Hinzufügen eines Zeitstempels vor Anwendung der Hash-Funktion.

Anschließend erfolgt eine Übertragung des ersten Abbildungsmerkmals IM1 an eine oder mehrere als jeweilige Authentifizierungsstelle EMP fungierende Server eines oder mehrerer Elektromobilitätsanbieter. Diese Authentifizierungsstellen EMP prüfen nun, vereinfacht dargestellt, jeweils, ob der Nutzer USR in der Authentifizierungsstelle EMP registriert ist.

Eine jeweilige Authentifizierungsstelle EMP nimmt das erhaltene erste Abbildungsmerkmal IM1 zunächst entgegen und speichert dieses lokal in einem - zeichnerisch nicht dargestellten - Speicherbereich der Authentifizierungsstelle EMP. Anschließend erfolgt auf Seiten der Authentifizierungsstelle EMP ein Vergleich des zwischengespeicherten ersten Abbildungsmerkmals IM1 mit einer Mehrzahl von zweiten Abbildungsmerkmalen IM2, welche durch jeweilige Anwendung einer zweiten Zuordnungsvorschrift MP2 auf lokal in der Authentifizierungsstelle EMP gespeicherte zweite Identifikationsmerkmale ID2 gebildet werden. Die jeweilige Anwendung der zweiten Zuordnungsvorschrift MP2 auf die lokal in der Authentifizierungsstelle EMP gespeicherten zweiten Identifikationsmerkmale ID2 kann nacheinander bzw. sequentiell oder auch parallel bzw. im Wesentlichen gleichzeitig erfolgen.

Die jeweiligen zweiten Identifikationsmerkmale ID2 können gemeinsam mit zugehörigen zweiten Abbildungsmerkmalen IM2 in einer Datenbank DBE gespeichert werden, wobei auch die Bezugnahme zwischen dem jeweiligen zweiten Identifikationsmerkmale ID2 und dem zugehörigen zweiten Abbildungsmerkmalen IM2 in der Datenbank DBE gespeichert ist. Alternativ sind nur die zweiten Identifikationsmerkmale ID2 in der Datenbank DBE gespeichert, wobei die aus den jeweiligen zweiten Identifikationsmerkmale ID2 gebildeten zweiten Abbildungsmerkmalen IM2 durch jeweilige Anwendung der zweiten Zuordnungsvorschrift MP2 bei Bedarf gebildet werden, ohne dass die gebildeten zweiten Abbildungsmerkmalen IM2 in der Datenbank DBE hinterlegt werden.

Anschließend erfolgt - beispielsweise durch eine in einer Steuerungsumgebung der Authentifizierungsstelle EMP ausgeführte erste Prüfungsroutine EQ1 - eine erste Prüfung EQ1, ob zumindest teilweise Übereinstimmung zwischen dem jeweiligen zweiten Abbildungsmerkmal IM2 und dem ersten Abbildungsmerkmal IM1 besteht. Falls zumindest teilweise Übereinstimmung besteht, erfolgt eine Übertragung des dem übereinstimmenden zweiten Abbildungsmerkmal IM2 zugeordneten zweiten Identifikationsmerkmals ID2 von der Authentifizierungsstelle EMP an den Ladepunkt CP.

Am Ladepunkt CP erfolgt nun - beispielsweise durch eine in einer Steuerungsumgebung des Ladepunkts CP ausgeführte zweite Prüfungsroutine EQ2 - eine zweite Prüfung EQ2, ob Übereinstimmung zwischen dem zweiten Identifikationsmerkmal ID2 und dem ersten Identifikationsmerkmal ID1 besteht. Falls das Ergebnis dieser Prüfung positiv ist - falls also das von der Authentifizierungsstelle EMP empfangene zweite Identifikationsmerkmal ID2 mit dem lokal vorgehaltenen ersten Identifikationsmerkmal ID1 übereinstimmt - erfolgt eine Autorisierung des Ladevorgangs. Eine Autorisierung des Ladevorgangs kann alternativ auch ohne diese zweite Prüfung EQ2 erfolgen, falls die Steuerung des Ladepunkts CP so konfiguriert ist, dass einem Empfang eines von einer Authentifizierungsstelle EMP gesendeten zweiten Identifikationsmerkmal ID2 unmittelbar vertraut wird.

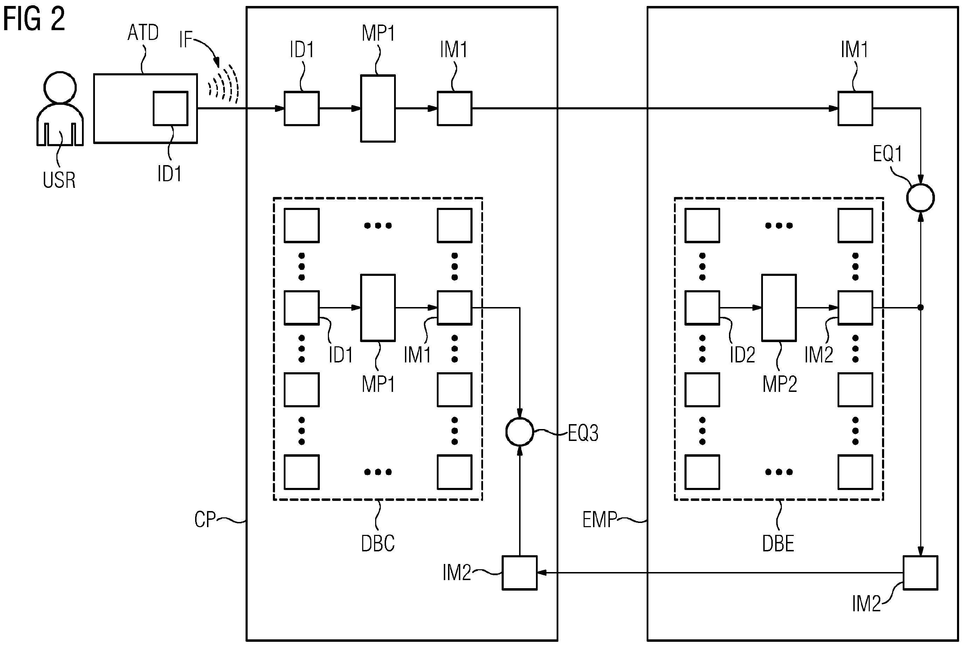

Die in FIG 2 dargestellte zweiten Variante unterscheidet sich von der in FIG 1 gezeigten ersten Variante vornehmlich dadurch, dass in der zweiten Variante ein größerer Anteil eines Rückschlusses vom zweiten Abbildungsmerkmal IM2 auf den zu authentifizierenden Nutzer USR auf Seiten des Ladepunkts CP durchgeführt wird. Im Unterschied zur ersten Variante überträgt die Authentifizierungsstelle EMP nicht das zweite Identifikationsmerkmal ID2, sondern das zweite Abbildungsmerkmal IM2 an den Ladepunkt CP.

Gemäß einem Ausführungsbeispiel ist vorgesehen, dass das zweite Abbildungsmerkmal IM2 zunächst lokal in einem - zeichnerisch nicht dargestellten - Speicherbereich des Ladepunkts CP gespeichert wird. Eine Mehrzahl jeweiliger erster Identifikationsmerkmale ID1 können gemeinsam mit zugehörigen ersten Abbildungsmerkmalen IM1 in einer Datenbank DBC vorliegen, wobei auch die Bezugnahme zwischen dem jeweiligen ersten Identifikationsmerkmale ID1 und dem zugehörigen ersten Abbildungsmerkmalen IM1 in der Datenbank DBC gespeichert ist. Alternativ sind nur die ersten Identifikationsmerkmale ID1 in der Datenbank DBC gespeichert, wobei die aus den jeweiligen ersten Identifikationsmerkmale ID1 gebildeten ersten Abbildungsmerkmalen IM1 durch jeweilige Anwendung der ersten Zuordnungsvorschrift MP1 bei Bedarf gebildet werden, ohne dass die gebildeten ersten Abbildungsmerkmale IM1 in der Datenbank DBE hinterlegt sind. Anschließend erfolgt, beispielsweise in einer dritten Prüfungsroutine EQ3, eine erste Prüfung EQ3, ob Übereinstimmung zwischen (genau) einem der Abbildungsmerkmalen IM1 mit dem zweiten Abbildungsmerkmal IM2 besteht. Falls eine Übereinstimmung mit dem zweiten Abbildungsmerkmal IM2 besteht, wird der Ladevorgang autorisiert.

Die in FIG 1 und FIG 2 dargestellten Varianten sind im Übrigen nicht isoliert zu betrachten. Es versteht sich, dass die beschriebenen erfindungsgemäßen Elemente, Datenbankstrukturen und Kommunikationsweisen beider Varianten auf unterschiedliche Weise kombiniert werden können, die ebenfalls in den Umfang der vorliegenden Erfindung fallen. Die vorstehende Beschreibung soll demnach eher veranschaulichend als einschränkend anzusehen zu sehen.

Die vorliegende Erfindung zeigt zusammenfassend ein datensparsameres Verfahren zur Autorisierung eines Ladevorgangs, mit dem eine missbräuchliche Verwendung von Identifikationsmerkmalen seitens eines Vertragspartners technisch unterbunden oder beschränkt wird. Zur Authentifizierung eines Nutzers an einem Ladepunkt werden üblicherweise Authentifikationsmittel, insbesondere Ladekarten oder RFID-Karte, eingesetzt. Ein auf der Ladekarte gespeichertes Identifikationsmerkmal wird derzeit an eine Vielzahl möglicher Vertragspartner übertragen, um eine Authentifizierung durch einen hierzu berechtigten Vertragspartner zu erzielen. Im Gegensatz zu derzeit üblichen Verfahren wird zur erfindungsgemäßen Authentifizierung ein Abbildungsmerkmal anstelle des Identifikationsmerkmals an die Vielzahl möglicher Vertragspartner übertragen. Eine Authentisierung erfolgt nicht durch Vergleich der in einem »Klartext« vorliegenden Identifikationsmerkmale, sondern durch Vergleich der Abbildungsmerkmale, welche beispielsweise als kryptographische Hashwerte der Identifikationsmerkmale vorliegen. Dadurch kann ein Unberechtigter keinen Zugriff auf die Identifikationsmerkmale erlangen. Die Erfindung zeigt zwei Varianten, wonach der Vergleich der Abbildungsmerkmale entweder im Ladepunkt oder in einer Authentifizierungsstelle des Vertragspartners stattfindet.

## Patentansprüche

1. Verfahren zur Autorisierung eines Ladevorgangs an einem Ladepunkt, umfassend folgende Schritte:
a) Aufbau einer Schnittstelle (IF) zwischen einem Authentifikationsmittel (ATD) eines Nutzers (USR) und dem Ladepunkt (CP) und Übertragung eines im Authentifikationsmittel (ATD) gespeicherten ersten Identifikationsmerkmals (ID1) an den Ladepunkt (CP);
b) Bildung eines ersten Abbildungsmerkmals (IM1) durch Anwendung einer ersten Zuordnungsvorschrift (MP1) auf das erste Identifikationsmerkmal (ID1) und Übertragung des ersten Abbildungsmerkmals (IM1) an mindestens eine Authentifizierungsstelle (EMP);
c) Laden mindestens eines in der mindestens einen Authentifizierungsstelle (EMP) gespeicherten zweiten Identifikationsmerkmals (ID2), Bildung mindestens eines zweiten Abbildungsmerkmals (IM2) durch Anwendung einer zweiten Zuordnungsvorschrift (MP2) auf das mindestens eine zweite Identifikationsmerkmal (ID2) und Prüfung (EQ1) einer Übereinstimmung zwischen dem mindestens einen zweiten Abbildungsmerkmal (IM2) und dem ersten Abbildungsmerkmal (IM1) ;
d) im Fall eines übereinstimmenden zweiten Abbildungsmerkmals (IM2), Übertragung des dem übereinstimmenden zweiten Abbildungsmerkmal (IM2) zugeordneten zweiten Identifikationsmerkmals (ID2) von der Authentifizierungsstelle (EMP) an den Ladepunkt (CP);
e) Prüfung (EQ2) einer Übereinstimmung zwischen dem zweiten Identifikationsmerkmal (ID2) und dem ersten Identifikationsmerkmal (ID1); und;
f) Autorisierung des Ladevorgangs im Fall eines übereinstimmenden zweiten Identifikationsmerkmals (ID2).

2. Verfahren nach Patentanspruch 1, umfassend folgende die Schritte d), e) und f) ersetzende Verfahrensschritte,
d) im Fall eines übereinstimmenden zweiten Abbildungsmerkmals (IM2), Übertragung des zweiten Abbildungsmerkmal (IM2) von der Authentifizierungsstelle (EMP) an den Ladepunkt (CP);
e) Laden mindestens eines im Ladepunkt (CP) gespeicherten ersten Identifikationsmerkmals (ID1), Bildung mindestens eines ersten Abbildungsmerkmals (IM1) durch Anwendung der ersten Zuordnungsvorschrift (MP1) auf das mindestens eine erste Identifikationsmerkmal (ID1) und Prüfung (EQ3) einer Übereinstimmung zwischen dem mindestens einen ersten Abbildungsmerkmal (IM1) und dem zweiten Abbildungsmerkmal (IM2) ;
f) Autorisierung des Ladevorgangs im Fall eines übereinstimmenden zweiten Abbildungsmerkmal (IM2).

3. Verfahren nach einem der vorgenannten Patentansprüche, **dadurch gekennzeichnet, dass** im Ladepunkt (CP) nach Durchführung des Schritts d) ein die sendende Authentifizierungsstelle (EMP) charakterisierendes Herkunftsdatum ermittelt.

4. Verfahren nach Patentanspruch 3, **dadurch gekennzeichnet, dass** das die sendende Authentifizierungsstelle (EMP) charakterisierenden Herkunftsdatum im Ladepunkt (CP) für eine Zuordnung zum ersten Identifikationsmerkmal (ID1) hinterlegt wird.

5. Verfahren nach Patentanspruch 4, **dadurch gekennzeichnet, dass** nach Durchführung des Verfahrensschritts a) geprüft wird, ob im Ladepunkt (CP) ein charakterisierendes Herkunftsdatum zu dem ersten Identifikationsmerkmal (ID1) hinterlegt ist.

6. Verfahren nach einem der vorgenannten Patentansprüche, **dadurch gekennzeichnet, dass** die Authentifizierungsstelle (EMP) nach Empfang des ersten Abbildungsmerkmals (IM1) ein den sendenden Ladepunkt (CP) charakterisierendes Herkunftsdatum ermittelt.

7. Verfahren nach Patentanspruch 6, **dadurch gekennzeichnet, dass** das den sendenden Ladepunkt (CP) charakterisierende Herkunftsdatum in der Authentifizierungsstelle (EMP) für eine Zuordnung zu dem zum ersten Abbildungsmerkmals (IM1) identischen zweiten Abbildungsmerkmals (IM2) hinterlegt wird.

8. Verfahren nach Patentanspruch 7, **dadurch gekennzeichnet, dass** nach Empfang des ersten Abbildungsmerkmals (IM1) in der Authentifizierungsstelle (EMP) geprüft wird, ob in der Authentifizierungsstelle (EMP) ein den sendenden Ladepunkt (CP) charakterisierendes Herkunftsdatum zu dem mit dem ersten Abbildungsmerkmal (IM1) übereinstimmenden Abbildungsmerkmal (IM2) hinterlegt ist.

9. Verfahren nach Patentanspruch 8, **dadurch gekennzeichnet, dass** bei Vorliegen eines den sendenden Ladepunkt (CP) charakterisierendes Herkunftsdatums der Verfahrensschritt c) übersprungen wird.

10. Verfahren nach einem der vorgenannten Patentansprüche, **dadurch gekennzeichnet, dass** die erste Zuordnungsvorschrift (MP1) und die zweite Zuordnungsvorschrift (MP2) identische Funktionen sind.

11. Verfahren nach einem der vorgenannten Patentansprüche, **dadurch gekennzeichnet, dass** die erste Zuordnungsvorschrift (MP1) und die zweite Zuordnungsvorschrift (MP2) Einwegfunktionen sind.

12. Verfahren nach einem der vorgenannten Patentansprüche, **dadurch gekennzeichnet, dass** die Schnittstelle (IF) eine Nahfeldschnittstelle ist.

13. Autorisierungseinrichtung zur Autorisierung eines Ladevorgangs an einem Ladepunkt, umfassend:
- ein Schnittstellenmodul zur Einrichtung einer Schnittstelle (IF) mit einem Authentifikationsmittel (ATD) eines Nutzers (USR) und zur Entgegennahme eines im Authentifikationsmittel (ATD) gespeicherten ersten Identifikationsmerkmals (ID1);
- ein Authentifizierungsmodul zur Bildung eines ersten Abbildungsmerkmals (IM1) durch Anwendung einer ersten Zuordnungsvorschrift (MP1) auf das erste Identifikationsmerkmal (ID1) und zur Übertragung des ersten Abbildungsmerkmals (IM1) an mindestens eine Authentifizierungsstelle (EMP);
das Authentifizierungsmodul eingerichtet:
a) zur Entgegennahme eines zweiten Identifikationsmerkmals (ID2), zur Prüfung (EQ2) einer Übereinstimmung zwischen dem zweiten Identifikationsmerkmal (ID2) und dem ersten Identifikationsmerkmal (ID1) und zur Autorisierung des Ladevorgangs im Fall eines übereinstimmenden zweiten Identifikationsmerkmals (ID2); und/oder;
b) zur Entgegennahme eines zweiten Abbildungsmerkmals (IM2), zur Prüfung (EQ3) einer Übereinstimmung zwischen dem ersten Abbildungsmerkmal (IM1) und dem zweiten Abbildungsmerkmal (IM2) und zur Autorisierung des Ladevorgangs im Fall eines übereinstimmenden zweiten Abbildungsmerkmals (IM2); und/oder;
c) zur Entgegennahme eines zweiten Abbildungsmerkmals (IM2), zum Laden mindestens eines im Ladepunkt (CP) gespeicherten ersten Identifikationsmerkmals (ID1), zur Bildung mindestens eines ersten Abbildungsmerkmals (IM1) durch Anwendung der ersten Zuordnungsvorschrift (MP1) auf das mindestens eine erste Identifikationsmerkmal (ID1) und Prüfung (EQ3) einer Übereinstimmung zwischen dem mindestens einen ersten Abbildungsmerkmal (IM1) und dem zweiten Abbildungsmerkmal (IM2) und zur Autorisierung des Ladevorgangs im Fall eines übereinstimmenden zweiten Abbildungsmerkmals (IM2).
